Europäisches Patentamt

European Patent Office

Office européen des brevets

(19)

(11) Veröffentlichungsnummer: **0 065 268**
**B1**

(12)

# EUROPÄISCHE PATENTSCHRIFT

(45) Veröffentlichungstag der Patentschrift:
21.11.84

(21) Anmeldenummer: 82104109.2

(22) Anmeldetag: 12.05.82

(51) Int. Cl.³: **C 09 D 11/08,** C 09 D 11/10,
C 08 L 93/00

(54) Verfahren zur Herstellung von Druckfarbenbindemitteln und ihre Verwendung in Druckfarben.

(30) Priorität: 16.05.81 DE 3119637
14.07.81 DE 3127719

(43) Veröffentlichungstag der Anmeldung:
24.11.82 Patentblatt 82/47

(45) Bekanntmachung des Hinweises auf die Patenterteilung:
21.11.84 Patentblatt 84/47

(84) Benannte Vertragsstaaten:
AT BE CH DE FR GB IT LI NL SE

(56) Entgegenhaltungen:
DE - B - 1 546 771

(73) Patentinhaber: HOECHST AKTIENGESELLSCHAFT,
Postfach 80 03 20, D-6230 Frankfurt am Main 80 (DE)

(72) Erfinder: Rudolphy, Albert, Wilhelm-Kalle-Strasse 20,
D-6200 Wiesbaden (DE)
Erfinder: Werner, Gerhard, Dr., Zum Talblick 50,
D-6246 Glashütten/Taunus (DE)

## Beschreibung

Die Entwicklung besonders schnellaufender Druckmaschinen und der Trend, neben gegebenenfalls nur leicht gestrichenen Papieren in erhöhtem Maße auch nichtgestrichene Papiere zu bedrucken, stellt besonders hohe Anforderungen an die Qualität der Tiefdruckfarben. Diese sollen so stabil sein, daß sie auch mit Rot-, Blau- und Gelbpigmenten gelagert werden können und ihren Farbton möglichst wenig verändern. Außerdem sollen sie eine gute Pigmentbenetzung aufweisen, rasch trocknen und den Drucken einen guten Stand auf der Unterlage und hohen Glanz verleihen. Besonders schwierig ist es, solche Forderungen mit niedrigviskosen Harzen im Bereich von 50 bis 150 mPa · s (50%ig in Toluol/20° C nach Ubbelohde) zu erfüllen.

Es ist bekannt, Druckfarbenbindemittel auf der Basis von Reaktionsprodukten aus a) Naturharzen, b) weiteren Kunstharzen, z. B. Kohlenwasserstoffharzen mit einer Bromzahl von 5 bis 80 und c) Calciumverbindungen und gegebenenfalls weiteren Verwendungen von Metallen der II. Gruppe des Periodischen Systems, z. B. Zinkverbindungen, herzustellen. Bei diesem Verfahren wird gleichzeitig eine ungesättigte Dicarbonsäureeinheit, z. B. Maleinsäureanhydrid, umgesetzt. Dieses Verfahren hat den Nachteil, daß dabei sehr hochviskose Produkte entstehen, die als Druckfarbenbindemittel praktisch nicht verwertbar sind.

Ein weiteres bekanntes Verfahren beinhaltet die Umsetzung von Naturharzen mit a) ungesättigten Monomeren ohne freie COOH-Gruppen und b) Phenolharz und/oder dessen Komponenten, worauf das Reaktionsprodukt gegebenenfalls mit c) Zink-, Magnesium- oder Calciumverbindungen zu einem Metallsalz umgesetzt wird. Es kann zunächst eine ungesättigte Carbonsäurekomponente mit dem Monomeren, z. B. unter Telomerisatbildung umgesetzt und das Telomerisat mit dem Naturharz zur Reaktion gebracht werden. Als Monomere sind dort unter anderem auch Cyclopentadien und Dicylclopentadien und entsprechende Kohlenwasserstoff-Fraktionen genannt. Diese bekannten Reaktionsprodukte, die auch als Druckfarbenbindemittel Verwendung finden können, haben sich zwar gut bewährt, doch war es erwünscht, Druckfarbenmittel herzustellen, deren Trocknungsgeschwindigkeit erhöht ist.

Es ist weiter ein Bindemittel für eine Tiefdruckfarbe für Papier bekannt, das aus einem Reaktionsprodukt besteht, das durch Umsetzung von 100 Gewichtsteilen von Cyclopentadien oder Dicyclopentadien bzw. deren Mono- oder Dimethylsubstitutionsprodukten mit 1 bis 30 Gewichtsteilen einer $\alpha,\beta$-äthylenisch ungesättigten Dicarbonsäure oder eines Anhydrids davon, 5 bis 100 Gewichtsteilen einer Harzsäure und 0,05 bis 11 Gewichtsteilen einer Harzsäure und 0,05 bis 11 Gewichtsteilen mindestens eines Oxyds, Hydroxyds oder Acetats eines zweiwertigen Metalls entsteht und das einen Erweichungspunkt von 130 bis 240° C und eine Säurezahl von nicht mehr als 100 aufweist. Nach einer Ausführungsform können Cyclopentadien und die Dicarbonsäure zuerst in der Wärme mischpolymerisiert werden. Danach kann das Mischpolymerisat mit der Harzsäure und der Metallverbindung gleichzeitig oder nacheinander umgesetzt werden. Die Umsetzung kann mit der Metallverbindung auch in einem Lösungsmittel, und zwar Benzol, Toluol, Xylol oder »Petroleumsolvent« in Gegenwart einer katalytisch wirksamen Menge eines organischen Säurekatalysators, nämlich Ameisensäure, Essigsäure, Milchsäure, Weinsäure oder Zitronensäure, bei einer Temperatur von 50 bis 200° C erfolgen. Bei diesem Bindemittel liegt also immer ein Unterschuß an Harzsäure im Verhältnis zu der Summe aus Cyclopentadien, Dicyclopentadien und dergleichen und der Dicarbonsäure bzw. deren Anhydrid vor. Eine Neutralisation mit Essigsäure findet nicht statt. Die Trocknungsgeschwindigkeit der Druckfarben ist jedoch zurückstehend.

Die Erfindung betrifft nun ein Verfahren zur Herstellung von Druckfarbenbindemitteln auf der Basis von Reaktionsprodukten aus a) Naturharzen, b) weiteren Kunstharzen, c) $\alpha,\beta$-olefinisch ungesättigten Carbonsäureeinheiten oder einem Mischpolymerisat aus (b+c), und d) Calciumverbindungen und gegebenenfalls weiteren Verbindungen von Metallen der II. Gruppe des Periodischen Systems, dadurch gekennzeichnet, daß A) das Naturharz a) mit B$_1$) einem Kohlenwasserstoff-Polymerisat b$_1$) auf der Grundlage von polymerisierten Kohlenwasserstoffen mit isolierten C$_5$-Ringen mit Bromzahlen von 80 bis 200 und der Carbonsäureeinheit c$_1$) oder B$_2$) dem Mischpolymerisat (b+c) mit einer Säurezahl von 35 bis 100 aus b) polymerisierbaren Kohlenwasserstoffen mit isolierten C$_5$-Ringen und c) einer $\alpha,\beta$-olefinisch ungesättigten Carbonsäurekomponente, wobei das Naturharz a) und das Mischpolymerisat (b+c) bzw. die Summe der Komponenten b$_1$) und c$_1$) im Gewichtsverhältnis von (1 bis 5) : 1, vorzugsweise (1 bis 1,5) : 1 bzw. 1 : 0,7 bis 1 zu einem Produkt mit der Säurezahl von 75 bis 150 und sodann C) mit Metallverbindungen d) mindestens einer Calciumverbindung in einer Menge von 1,5 bis 6 Gew.-% Metallanteil, bezogen auf die Gesamtmenge der Komponenten a) bis c), so umgesetzt wird, daß die Säurezahl um mindestens ein Drittel, vorzugsweise um mindestens 45% verringert wird und daß nach der Umsetzung der Metallverbindungen noch nicht umgesetzte Metallverbindungen durch Behandlung mit Essigsäure über Acetate in Salze des Harzes umgewandelt werden.

Die erfindungsgemäß erhaltenen Produkte haben den Vorteil, daß sie eine extrem niedrige Viskosität aufweisen und besonders günstige Eigenschaften als Druckfarbenbindemittel, insbesondere für den Toluoltiefdruck haben. Sie sind in Toluol löslich, »blocken« nicht bei der Herstellung und enthalten keinen störenden Anteil an nicht umgesetzten Metallverbindungen. Sie haben im allgemeinen einen Schmelzpunkt von mindestens 120° C (Kapillarmethode), eine Säurezahl von 20 bis 80 und eine Viskosi-

2

0 065 268

tät von 40 bis 600, vorzugsweise 50 bis 400 mPa · s (50% in Toluol/20°C).

Das Naturharz a) kann beispielsweise in Form von Naturharzsäuren, wie Kolophonium, Wurzelharz, Tallharz, teilweise dimerisierten Produkten davon oder dergl. vorliegen. Es kann auch in Form eines Reaktionsproduktes von Naturharz mit a1) Maleinsäureanhydrid und/oder a2) Phenolharz oder dessen Komponenten und/oder a3) olefinisch-ungesättigten aromatischen Kohlenwasserstoffen oder a4) Formaldehyd (vorzugsweise als Paraformaldehyd) oder a5) Phenol oder a6) Dicyclopentadien eingesetzt werden, wobei auch unmodifiziertes Naturharz zusammen mit mindestens einem derart modifizierten Naturharz eingesetzt werden kann. Als ungesättigte aromatische Kohlenwasserstoffe a3) eignen sich z. B. die verschiedenen Vinyltoluole, -Methylstyrol, Inden und vorzugsweise Styrol. Die Reaktion mit diesen Stoffen erfolgt im allgemeinen bei Temperaturen von 150 bis 200°C.

Der gesamte Anteil der vorgenannten zusätzlichen Stoffe a1) bis a6) kann z. B. bis zu 25, vorzugsweise 2 bis 15 Gew.-%, bezogen auf die Summe der Komponenten a) bis c) bzw. a) und (b+c) betragen. Wenn derartige Reaktionsprodukte verwendet werden, wird der Anteil des Naturharzes zu der Komponente a) und der der zusätzlichen modifizierenden Komponenten zu dem Polymerisat b1) bzw. (b+c) zugerechnet. Die Stoffe a1) bis a5) können auch während oder nach der Umsetzung der Komponenten a) bis c) bzw. a) und (b+c) zur Modifizierung eingesetzt werden. Zusätzliches Maleinsäureanhydrid ist dagegen bei c1) bzw. (b+c) zu berücksichtigen.

Durch die Verwendung oder Mitverwendung von Reaktionsprodukten von Naturharz mit a1) Maleinsäureanhydrid und/oder a2) Phenolharz (Resol oder Novolak) oder a5) Phenol lassen sich der Schmelzpunkt des Endproduktes und die Viskosität der daraus hergestellten Farben erhöhen. Diese haben einen guten Stand auf dem Druckpapier, Novolake können auch während der Umsetzung unter dem Einfluß von sauren Katalysatoren aus den Komponenten aufgebaut werden.

Durch die Verwendung oder Mitverwendung von Naturharzen, die mit a4) Formaldehyd modifiziert sind, erhält man beispielsweise Produkte, die trotz niedriger Viskosität einen guten Stand auf dem Papier aufweisen, sehr rasch trocknen und besonders im gelben Farbbereich stabile Druckfarben ergeben.

Durch die Modiffizierung mit a3) ungesättigten aromatischen Kohlenwasserstoffen erhält man Bindemittel, die noch niedriger schmelzen und niedrigviskoser sind als die nicht mit diesen Kohlenwasserstoffen modifizierten Harze gleichen Aufbaus, die jedoch noch den drucktechnischen Anforderungen genügen. Die Modifizierung mit diesen Kohlenwasserstoffen ist also dann angebracht, wenn niedrigviskose Harze erwünscht sind und dies nicht durch Veränderung der Menge Naturharzsäure oder des Polymerisats erreicht werden soll. Es ist möglich, die Viskosität der mit z. B. Styrol modifizierten Harze weitgehend zu variieren, indem man den Metallgehalt entsprechend erhöht oder die Mengen an Carbonsäuren und Modifizierungsmitteln verändert.

Die Polymerisate b1) bzw. die Mischpolymerisate (b+c) sind z. B. vor allem solche auf der Grundlage von polymerisierbaren Kohlenwasserstoffen mit isolierten $C_5$-Ringen wie Cyclopentadien, dessen Alkylsubstitutionsprodukten und deren Oligomeren, ferner Polymerisate, die sich zu einem überwiegenden Anteil von diesen cyclischen Verbindungen ableiten, z. B. Polymere von Dicyclopentadien und/oder Methylcyclopentadien. Geeignete Comonomere sind z. B. Styrol, $\alpha$-Methylstyrol, die verschiedenen Vinyltoluole, Piperylen, Penten, Isopren oder dergleichen, jeweils einzeln oder im Gemisch. Die Polymerisate b1), die Homo- und/oder Copolymerisate sein können, sind frei von Comonomeren mit funktionellen Gruppen wie COOH- und OH-Gruppen. Zweckmäßig werden solche Polymerisate b1) als Ausgangskomponenten eingesetzt, die eine Bromzahl von 80 bis 200 und ein mittleres Molekulargewicht von 300 bis 5000, vorzugsweise 350 bis 3000 aufweisen, wobei sie im Verhältnis 0,7 bis 1,0 zu einem Teil Naturharz a) zum Einsatz kommen. Die mit Carbonsäureeinheiten modifizierten Polymerisate (b+c) haben eine Säurezahl von 35 bis 100 und kommen zweckmäßig mit einem mittleren Molekulargewicht von 300 bis 800, vorzugsweise 350 bis 700 zum Einsatz.

Als $\alpha,\beta$-olefinisch-ungesättigte Carbonsäurekomponente c) oder als Säurekomponente zur Herstellung des Polymerisates (b+c) eignen sich beispielsweiser Fumar-, Itacon-, Acryl- und/oder Methacrylsäure, vorzugsweise jedoch Maleinsäure oder deren Anhydrid. Ihr Anteil beträgt 7—20, vorzugsweise 10—18, insbesondere 12, 4—16 Gew.-%, bezogen auf die eingesetzte Menge der polymerisierbaren Kohlenwasserstoffe bzw. des Kohlenwasserstoffpolymerisats b1).

Geeignete Metallverbindungen d) sind solche von Calcium sowie Magnesium und/oder Zink, wobei die Anwesenheit von Calcium zwingend ist. Im einzelnen seien genannt Calciumoxyd, Calciumhydroxyd, Zinkoxyd, Zinkhydroxyd, Magnesiumoxyd und Magnesiumhydroxyd. Auch Calciumacetat kann verwendet werden, jedoch nur in einer Menge von höchstens 30, vorzugsweise höchstens 25 Mol-%, bezogen auf die Summe der Calciumverbindungen. Wenn die Calciumverbindung im Gemisch mit mindestens einer Verbindung eines anderen Metalls eingesetzt wird, macht der Anteil an Calcium zweckmäßig über 70 Gew.-% des gesamten Metallgehalts aus. Bevorzugt beträgt der Metallanteil 1,8 bis 4,5 Gew.-%, bezogen auf die Summe der Komponenten a) bis c) bzw. a) und (b+c).

Die in den Schmelzen aus Naturharzsäuren, Polymerisat $b_1$) und Dicarbonsäureeinheit c1) bzw. aus Naturharzsäuren und Mischpolymerisat (b+c) enthaltenen COOH-Gruppen werden durch die Umsetzung mit den Metallverbindungen teilweise versalzt. In der Regel werden im allgemeinen höchstens 70, vorzugsweise bis zu 65% der COOH-Gruppen des Reaktionsproduktes versalzt. Durch diese teilweise Versalzung ist der Vorteil gegeben, daß das Endprodukt eine erhöhte Polarität, gute Pigmentbe-

3

netzung sowie einen hohen Schmelzpunkt aufweist. Außerdem zeichnet sich das Produkt durch eine rasche Lösungsmittelabgabe aus.

Durch die erfindungsgemäße Behandlung mit Essigsäure (vorzugsweise Eisessig), die zu Vervollständigung der Salzbildung mit den Metallverbindungen dient wird die Überführung nicht umgesetzter Calciummengen in das entsprechende Salz und gleichzeitig auch eine Erhöhung des Schmelzpunktes und der Viskosität des Endproduktes in den für den Einsatz als Druckfarbenbindemittel günstigen Bereich erreicht. Etwa nicht umgesetzte Essigsäure braucht nicht aus dem Reaktionsgemisch entfernt zu werden, da sie sich nicht nachteilig auf die Eigenschaften auswirkt.

Eine weitere Möglichkeit der Modifizierung besteht darin, daß nach der Umsetzung der Komponente a) mit dem Mischpolymerisat (b + c) noch eine weitere Umsetzung der Komponente (b + c), vorzugsweise derselben wie in erster Stufe, erfolgen kann. Diese nachträgliche Zugabe kann z. B. gleichzeitig mit der Metallverbindung erfolgen. Das hat beispielsweise den Vorteil, daß die Metallverbindung in dem Mischpolymerisat dispergiert werden kann und so zur Anwendung kommt. Derartiges zusätzliches Polymerisat (b + c) geht natürlich in die Berechnungsgrundlage für das Verhältnis a) : (b + c) ein.

In vielen Fällen, insbesondere wenn eine Modifizierung mit Phenolharz, Phenol oder Formaldehyd beabsichtigt ist, ist es vorteilhaft, die Umsetzung in Gegenwart von sauren Katalysatoren durchzuführen. Als solche seinen z. B. genannt Sulfonsäuren wie Benzolmono- und -disulfonsäure, Phenolsulfonsäure, Schwefelsäure, ferner Borfluorid-Komplexverbindungen, z. B. von Essigsäure oder Äthern und vorzugsweise p-Toluolsulfonsäure.

Die erfindungsgemäßen Produkte sind sehr gut in aromatischen Kohlenwasserstoffen, insbesondere in Toluol, löslich. Da sie außerdem Pigmente sehr gut benetzen, eignen sie sich ausgezeichnet als Bindemittel für Toluol-Tiefdruckfarben. Dabei zeichnen sie sich durch sehr rasche Trocknung, hohen Glanz, guten Stand auf gestrichenem und ungestrichenem Papier und hohe Farbstärke aus.

In den folgenden Beispielen bedeutet — wenn nicht anders angegeben — jeweils T Gewichtsteile, % Gewichtsprozent und SZ Säurezahl; die Viskositätsangaben der Endprodukte beziehen sich stets auf 50%ige Toluollösungen/20° C. Die Schmelzpunkte (Fp) wurden jeweils nach der Kapillarmethode bestimmt.

## Beispiele

1. In einem Reaktionsgefäß werden 570 T Balsamkolophonium mit 448 T eines Dicyclopentadien-Copolymerisats mit 16% Maleinsäureanhydrid, Fp 80° C, SZ 75, Viskosität (67%ig in Toluol/20° C) 450 mPa · s gemeinsam erhitzt. Bei 160° C werden 35 T eines Kondensationsproduktes aus 1 Mol Phenol und 1,6 Mol Formaldehyd (in Gegenwart von Natronlauge kondensiert, Rückstand 30 min/ 160° C 68%, Viskosität 280 mPa · s) zugegeben. Danach wird die Schmelze auf 200° C erhitzt. Nach 1 h/200° C wird eine SZ von 111 ermittelt. 28 T einer Mischung aus 16 T Essigsäure und 12 T Terpentinöl werden anteilweise zugegeben. Nach der Verteilung in der Schmelze wird eine Dispersion aus 20 T des oben beschriebenen Copolymerisats, gelöst in 35 T Xylol, und 52 T eindispergiertem $Ca(OH)_2$ innerhalb 30 min bei 220 bis 240° C in Portionen zugesetzt. Die Temperatur wird auf 250° C erhöht und 4 h beibehalten. Dann werden die flüchtigen Anteile bei 250° C/65 mbar im Laufe von 10 Minuten abdestilliert. Ausbeute: 1031 T Harz (Fp 180° C, SZ 36, Viskosität 273 mPa · s).

Als Bindemittel in Tiefdruckfarben verarbeitet, die 20% Rotpigment (bezogen auf das Harz) enthalten, bewirkt das Produkt guten Glanz, guten Stand auf Papier und sehr rasche Trocknung der Drucke.

## 1 V. (Vergleich)

Es wird gearbeitet wie nach Beispiel 1, jedoch ohne Neutralisation mit Essigsäure. Man erhält 1045 T eines Produktes, Fp 133° C, SZ 57, Viskosität 41 mPa · s. Das Harz fällt in einer trüben Lösung an, unverbrauchte Basenteile setzen sich ab. Eine daraus wie nach Beispiel 1 hergestellte Druckfarbe zeigt guten Glanz, jedoch schlechten Stand auf Papier und sehr langsame Trocknung.

2. 535 T (T bedeutet in diesem Beispiel jeweils g) amerikanisches Wurzelharz werden mit 448 T des Copolymerisats nach Beispiel 1 geschmolzen und 2 h/200° C erhitzt (SZ 108). Dann wird eine Dispersion, bestehend aus 20 T des Copolymerisats, 35 T Xylol und 50,5 T $Ca(OH)_2$, zugesetzt und gut in der Schmelze verteilt. Bei 240° C wird ein Gemisch aus 16 T Essigsäure und 16 T Xylol tropfenweise zugegeben. Nach 10 Minuten und nach Zugabe von insgesamt 20 Tropfen setzt eine schwache, bei weiterem Zutropfen stärker werdende Reaktion ein unter Zunahme der Schmelzviskosität und Blankwerden der Schmelze. Nach beendeter Zugabe wird 4 Stunden auf 260° C erhitzt und die flüchtigen Bestandteile innerhalb 10 min bei 65 mbar abdestilliert.

Ausbeute 965 T Harz (Fp 160° C, SZ 41, Viskosität 91 mPa · s).

Tiefdruckfarben mit diesem Produkt geben das Lösungsmittel sehr schnell ab.

## 2 V. (Vergleich)

Es wird gearbeitet wie nach Beispiel 2, jedoch ohne Neutralisation mit Essigsäure. Man erhält 972 T trübes Harz, Fp 132°C, SZ 55, Viskosität 23 mPa · s.

Toluoltiefdruckfarben mit diesem Produkt geben das Lösungsmittel sehr langsam ab.

3. 480 T des Copolymerisats nach Beispiel 1 werden mit 250 T Balsamkolophonium und 250 T schwedischem Tallharz auf 160°C erhitzt und 50 T Maleinsäureanhydrid bei 160°C zugesetzt, 2 h auf 200°C gehalten (SZ 122). 38,5 T CaO werden zugegeben und der Ansatz auf 240°C erhitzt. Dann wird eine Mischung aus 16 T Essigsäure und 30 T Xylol in Portionen zugegeben. Nach Zugabe von 25% des Essigsäuregemisches steigt die Viskosität unter Klarwerden der Schmelze an. Nach 4 h Erhitzung bei 250°C werden die flüchtigen Anteile entfernt. Ausbeute 928 T Harz (Fp 187°C, SZ 55, Viskosität 126 mPa · s).

In Tiefdruckfarben eingesetzt, bewirkt das Bindemittel sehr rasche Trocknung, guten Glanz und guten Stand auf Papier.

## 3 V. (Vergleich)

Es wird gearbeitet wie nach Beispiel 3, aber ohne Neutralisation mit Essigsäure. Man erhält 927 T trübes Harz, Fp 130°C Viskosität 25 mPa · s. Tiefdruckfarben mit diesem Harz haben schlechte Trocknung und schlechten Stand auf Papier.

4. 571 T chinesisches Kolophonium und 448 T Copolymerisat nach Beispiel 1 werden geschmolzen, bei 160°C 50 T Maleinsäureanhydrid zugegeben und das Gemisch 1 h bei 160°C und 1 h bei 200°C erhitzt (SZ 125). Es werden dann 105,5 T der im Beispiel 1 verwendeten Dispersionen zugegeben. Nach Erhitzen auf 240°C wird eine Mischung aus 28 T Essigsäure und 28 T Terpentinöl anteilweise zugesetzt, wobei nach Zugabe von ca. 2 T eine kräftige Reaktion einsetzt. Nach 30 Minuten ist die Zugabe beendet. Es wird auf 250°C erhitzt und das Gemisch 4 h bei 250°C gehalten. Die flüchtigen Anteile werden unter vermindertem Druck entfernt. Ausbeute 1063 T Harz (Fp 169°C, SZ 60, Viskosität 75 mPa · s).

5. 500 T polymerisiertes Tallharz (Fp 73°C, SZ 146 Viskosität 7,6 mPa · s) werden mit 448 T des Copolymerisats nach Beispiel 1 geschmolzen; bei 160°C wird eine Mischung von 30 T Essigsäure und 15 T Terpentinöl, dann 105,5 T einer Dispersion wie nach Beispiel 1, die jedoch nur 50,5 statt 52 T $Ca(OH)_2$ enthält, im Lauf von 30 Minuten zugesetzt. Nach beendeter Zugabe wird auf 180°C erhitzt und innerhalb von 10 min 10 T Phenol-Formaldehyd-Kondensat wie nach Beispiel 1 zugegeben. Es wird auf 250°C erhitzt und nach 3 h bei 250°C werden die flüchtigen Anteile entfernt. Ausbeute 955 T Harz (Fp 143°C, SZ 32, Viskosität 72 mPa · s).

Dieses Bindemittel wird mit 16% Blaupigment, berechnet auf Festkörper, zu Toluoltiefdruckfarben verarbeitet. Diese Farben zeigen rasche Trocknung.

6. 250 T amerikanisches Wurzelharz und 250 T Balsamkolophonium werden geschmolzen und 448 T des Copolymerisats nach Beispiel 1 zugegeben. Bei 160°C wird 1 T p-Toluolsulfonsäure zugesetzt. Das Gemisch wird auf 200°C erhitzt und eine Dispersion von 50,5 T $Ca(OH)_2$ in 50 T eines bei der Herstellung von Terpenphenolharz anfallenden Destillats und Xylol (1 : 1), innerhalb von 30 Minuten bei 200 bis 220°C zugegeben. Nach 1 Stunde bei 220°C wird eine Mischung aus 10 T Essigsäure und 10 T Xylol in Portionen zugesetzt. Nach 4 Stunden bei 250°C werden die flüchtigen Anteile entfernt. Ausbeute 976 T Harz (Fp 145°C, SZ 34, Viskosität 48 mPa . s).

6a. Beispiel 6 wird wiederholt, jedoch nach Zusatz von 1 T p-Toluolsulfonsäure bei 160°C 20 T Paraformaldehyd in 1 h allmählich zugegeben. Ausbeute 983 T Harz (Fp 155°C, SZ 28, Viskosität 119 mPa · s).

6b. Es wird gearbeitet wie nach Beispiel 6a), jedoch werden 30 T Paraformaldehyd umgesetzt. Ausbeute 989 T Harz (Fp 164°C, SZ 29, Viskosität 324 mPa · s).

6c. 6a) wird wiederholt, jedoch werden 40 T Paraformaldehyd eingesetzt. Ausbeute 994 T Harz (Fp 167°C, SZ 24, Viskosität 750 mPa · s).

7. Es wird verfahren wie nach Beispiel 6, jedoch werden nach Zugabe von 1 T p-Toluolsulfonsäure 30 T Phenol zugesetzt. Ausbeute 990 T Harz (Fp 136°C, SZ 7, Viskosität 47 mPa · s).

8. Es wird verfahren wie nach Beispiel 7, jedoch werden nach Zusatz der Toluolsulfonsäure außer Phenol bei 160°C zusätzlich 20 T Paraformaldehyd innerhalb 1 h zugesetzt. Ausbeute 999 T Harz (Fp 138°C, SZ 34, Viskosität 87 mPa · s).

9. Es wird verfahren wie nach Beispiel 7, jedoch wird das Phenol durch 25 T Maleinsäureanhydrid ersetzt. Ausbeute 1003 T Harz (Fp 149°C, SZ 47, Viskosität 54 mPa · s).

10. Es wird verfahren nach Beispiel 7, jedoch werden nach Zugabe der Toluolsulfonsäure noch 50 T Maleinsäureanhydrid zugesetzt. Ausbeute 1020 T Harz (Fp 158°C, SZ 58, Viskosität 59 mPa · s).

11. 571 T eines Teilesters aus Formaldehyd-Kolophonium (Gewichtsverhältnis Formaldehyd : Kolophonium 1 : 10) mit Schmelzpunkt 81°C, SZ 111 und einer Viskosität von 200 mPa · s (67%ig in Toluol/-20°C) werden mit 445 T des Copolymerisats nach Beispiel 1 geschmolzen; SZ der Schmelze 95. Das Gemisch wird bei 180°C mit 32 T CaO versetzt. 28 T eines aus 16 T Essigsäure und 12 T Terpentin bestehenden Gemisches werden innerhalb von 90 Minuten zugegeben. Das Gemisch wird 5 h bei 240°C gehalten und dann von flüchtigen Anteilen befreit. Ausbeute 987 T Harz (Fp 167°C, SZ 30, Viskosität 140 mPa · s).

Eine mit diesem Harz hergestellte Tiefdruckfarbe trocknet gut.

12. Es wird gearbeitet wie nach Beispiel 11, jedoch werden der Schmelze aus Teilester und Copolymerisat zusätzlich 50 T Maleinsäureanhydrid zugesetzt. Das Gemisch wird 2 h bei 180°C gehalten. SZ der Schmelze nach Addition 112. Danach werden 36 T CaO zugesetzt. Es wird wie nach Beispiel 11 weitergearbeitet.

Ausbeute 1032 T Harz (Fp 178°C, SZ 46, Viskosität 169 mPa · s).

Eine daraus hergestellte Tiefdruckfarbe trocknet rasch.

13. 580 T eines modifizierten Naturharzes in Form eines Copolymerisats aus Naturharzsäure und einer Dicyclopentadien-Fraktion mit 85% polymerisierbarem Material (40% Naturharzsäure-Gehalt), Schmelzpunkt 105°C, SZ 17, Viskosität (67%ig in Toluol/20°C) 514 mPa · s und 580 T Kolophonium werden mit 368 T Copolymerisat nach Beispiel 1 geschmolzen. Bei 200 C wird das Gemisch mit 53 T CaO versetzt. Dann werden 40 T 50%iger Essigsäure-Xylol-Mischung in 1 h bei 240°C zugegeben. Nach 4 h Erhitzen auf 250°C werden die flüchtigen Anteile bei 260°C entfernt. Ausbeute 1520 T Harz (Fp 167°C, SZ 29,7, Viskosität 140 mPa · s).

14. Es wird gearbeitet wie im Beispiel 13, jedoch werden 580 T eines ca. 75% Naturharzsäure enthaltenden Copolymerisats aus Naturharzsäure und Dicyclopentadien [Fp. 70°C, SZ 86, Viskosität (67%ig in Toluol/20°C) 98 mPa · s], 75 T amerikanisches Tallharz, 368 T Copolymerisat nach Beispiel 1, 30 T CaO und 23 T einer 50%igen Mischung aus Essigsäure und Xylol verarbeitet. Ausbeute 1008 T Harz (Fp. 141°C, SZ 32,5, Viskosität 77 mPa · s).

15. 290 T des Naturharzsäure-Dicyclopentadien-Copolymerisats nach Beispiel 14, 290 T Tallharz sowie 467 T Copolymerisat nach Beispiel 1 werden geschmolzen und bei 200°C mit 32, 7 T CaO versetzt. Dann werden in 1 h bei 240°C 24 T einer 50%igen Essigsäure-Xylol-Mischung anteilweise zugegeben. Das Gemisch wird 4 h auf 250°C erhitzt und von flüchtigen Anteilen befreit. Ausbeute 1038 T Harz (Fp 147°C, SZ 35, Viskosität 57 mPa · s).

In Toluol-Tiefdruckfarben verarbeitet, bewirkte das Bindemittel nach Beispiel 13 die rascheste Trocknung, nach Beispiel 14 und 15 resultierte fast übereinstimmende Trocknung.

16. 570 T Balsamkolophonium werden mit 447 T Copolymerisat nach Beispiel 1 geschmolzen. Bei 180°C werden 30 T eines Aralkylphenol-Resols rasch zugegeben. Dieses Resol (Viskosität 29 000 mPa · s) wurde durch Addition von 147 T Styrol an 177 T Phenol bei 100°C und darauffolgende alkalische Kondensation mit 60 T Paraformaldehyd bei 80 bis 90°C gewonnen. Bei 200°C werden 105,5 T der im Beispiel 1 verwendeten Dispersion innerhalb 20 Minuten zugegeben und dann ein Gemisch aus 16 T Essigsäure und 12 T Xylol in 90 Minuten zugesetzt. Das Gemisch wird 4 h bei 250°C gehalten und die flüchtigen Anteile dann entfernt. Ausbeute 1070 T Harz (Fp 177°C, SZ 39, Viskosität 150 mPa · s).

Eine Druckfarbe mit diesem Bindemittel trocknet rasch.

17. 1000 T portugiesisches Kolophonium werden bei 140°C mit 70 T des Phenolresols nach Beispiel 1 umgesetzt; bei 160°C werden 48 T CaO zugegeben und innerhalb von 15 Minuten bei 180°C eine Mischung aus 11 T ZnO und 34 T Calciumacetat. Nach Erhitzen auf 200°C werden 250 T des in Beispiel 1 verwendeten Copolymerisats zugegeben. Es wird auf 250°C geheizt und in einer Stunde eine Mischung aus 12 T Essigsäure und 12 T Terpentinöl zugegeben; nach 4 h bei 250°C werden die flüchtigen Anteile entfernt. Ausbeute 1308 T Harz, (Fp 160°C, SZ 49, Viskosität 167 mPa · s).

## Beispiele 18 bis 25

Die in Tabelle 1 angegebenen Komponenten (die Zahlen bedeuten T) werden in einem 2-Liter-Kolben mit Wasserabscheider und Rückflußkühler wie folgt verarbeitet: Copolymerisat und Naturharzsäure werden geschmolzen; unter Rühren wird zur Schmelze Styrol und bei 160°C Maleinsäureanhydrid zugesetzt. Anschließend wird auf 200°C geheizt und 1 h bei dieser Temperatur gehalten, worauf sich eine Temperatursteigerung auf 240°C anschließt. Bei den Beispielen 20 bis 25 wird die Tempertur insgesamt 3 Stunden auf 240°C gehalten, wobei unter diesen Bedingungen das Styrol weitgehend eingebaut wird. Dann wird der Wasserabscheider durch einen Destilationsbogen ersetzt, CaO zugegeben und nach 30 Minuten bei 240°C die Essigsäure-Xylol-Mischung vorsichtig zudosiert. Nach beginnender Umsetzung mit der Essigsäure werden die Harze klar und viskos. Nach Beendigung an Essigsäurezugabe wird noch 3 h bei 250°C gehalten, worauf unter vermindertem Druck die flüchtigen Anteile des Ansatzes entfernt werden. Zum Vergleich wird Beispiel 24V ohne Essigsäure-Anwendung durchgeführt. Man erhält hierbei ein trübes Harz, das in einer roten Tiefdruckfarbe eingesetzt, Druckfarbenaufzüge mit gutem Glanz, aber langsamer Trocknung ergibt.

26. 75 T amerikanisches Tallharz und 445 T eines Polymerisats auf der Basis eines $C_5$-Gemisches, das einen überwiegenden Anteil an Dicylcopentadien und einen wesentlichen Anteil an Methylcyclopentadien enthält, Fp 80°C, SZ 0, Bromzahl 155, Viskosität (67% in Toluol/20°C) 80 mPa · s, werden geschmolzen. Bei 160°C werden 63 T Maleinsäureanhydrid zugegeben; es wird auf 200°C erhitzt und das

6

Gemisch 2 h bei 200°C gehalten. Dann gibt man 450 T amerikanisches Tallharz zu. Die abgekühlte Schmelze wird bei 160°C mit 55 T eines Kondensationsproduktes aus 1 Mol Phenol und 1,6 Mol Formaldehyd (alkalisch kondensiert, Rückstand 30 min/160°C 68%, Viskosität 280 mPa · s), umgesetzt. Dann erhitzt man auf 180°C, setzt 35 T CaO zu, erwärmt auf 250°C und gibt 26 T einer Mischung aus 16 T Essigsäure und 12 T Terpentinöl anteilweise zu. Nach 15 min Zugabezeit für 2 T Essigsäure-Mischung wird das Harz viskos und innerhalb der gesamten Zugabezeit von 1 h blank. Das Gemisch wird 4 h auf 260°C gehalten und von flüchtigen Anteilen befreit. Ausbeute 1037 T Harz Fp 156°C, SZ 29, Viskosität 293 mPa · s).

Das Bindemittel wird zu einer Tiefdruckfarbe verarbeitet, die sehr rasch trocknet und den Drucken guten Glanz, Stand und Farbstärke gibt.

## 26 V. (Vergleich)

Es wird gearbeitet wie nach Beispiel 26, jedoch ohne Essigsäure-Behandlung. Man erhält 1042 T trübes Harz, (Fp 121°C, SZ 46, Viskosität 39 mPa · s). Dieses Bindemittel verleiht den Drucken guten Glanz, schlechten Stand und langsame Trocknung.

27. 525 T amerikanisches Tallharz und 445 T des apolaren Polymerisats nach Beispiel 26 werden geschmolzen und bei 140°C mit 70 T des Phenol-Formaldehyd-Kondensationsprodukts nach Beispiel 26 umgesetzt. Nach Erreichen von 200°C werden 73 T Maleinsäureanhydrid zugegeben. Das Gemisch wird 1 h auf 250°C gehalten. Dann setzt man 36 T CaO und nach 1 h allmählich ein Gemisch aus Essigsäure-Lackbenzin, auf 250°C gehalten. Dann setzt man 36 T CaO und nach 1 h allmählich ein Gemisch aus Essigsäure-Lackbenzin, das 16 T Essigsäure enthält, im Lauf einer Stunde zu. Die Schmelze wird 3 h bei 260°C weitererhitzt und die flüchtigen Anteile entfernt. Ausbeute 1062 T Harz (Fp 168°C, SZ 29, Viskosität 336 mPa · s).

Als Druckfarbenbindemittel bewirkt das Produkt sehr rasche Trocknung, guten Stand und Glanz der Drucke.

## 27 V. (Vergleich)

Es wird gearbeitet wie nach Beispiel 27, jedoch ohne Essigsäure-Behandlung. Man erhält 1059 T Harz (Fp 124°C, SZ 48, Viskosität 45 mPa · s). Das trübe Harz bewirkt in Drucken guten Glanz, schlechten Stand und langsame Trocknung.

28. 450 T amerikanisches Tallharz werden mit 445 T eines apolaren Polymerisats etwa derselben Zusammensetzung wie im Beispiel 26, Schmelzpunkt 105°C, SZ 0, Bromzahl 120, Viskosität (67% in Toluol/20°C) 4700 mPa · s geschmolzen. Bei 160°C werden 63 T Maleinsäureanhydrid zugesetzt. Das Gemisch wird 2 h bei 200°C erhitzt. Dann fügt man 75 T amerikanisches Tallharz und bei 180°C 42 T des Phenolresols nach Beispiel 26 zu. Das Gemisch wird erhitzt auf 190°C und 31 T CaO und 6 T Zinkoxyd werden zugegeben. Nach Erreichen von 250°C werden 10 T Essigsäure, in 20 T Lackbenzin gelöst, innerhalb einer Stunde zugegeben. Nach 15 min erhöht sich die Temperatur auf 260°C, das Harz wird blanker und viskoser. Nach beendeter Zugabe erhitzt man das Gemisch 4$^1$/$_2$ h auf 260°C und entfernt die flüchtigen Anteile. Ausbeute 1040 T Harz (Fp 153°C, SZ 41, Viskosität 350 mPa · s).

In Tiefdruckfarben eingesetzt, zeigt das Produkt schnelle Trocknung, guten Stand und guten Glanz.

29. In eine Schmelze aus 68 T Balsamkolophonium und 445 T neutralem Polymerisat etwa derselben Zusammensetzung wie nach Beispiel 26, Fp 72°C, Viskosität (67% in Toluol/20°C) 120 mPa · s, Bromzahl 155, werden bei 160°C 63 T Maleinsäureanhydrid gegeben. Man erhitzt 2 h bei 200°C und gibt dann 456 T Wurzelharz zu. Bei 160°C wird die geschmolzene Mischung mit 42 T des Phenolresols nach Beispiel 26 umgesetzt; dann werden 31 T CaO und 6 T ZnO zugegeben. Nach Erreichen von 250°C werden 28 T Essigsäure-Terpentinöl-Gemisch, das 10 T Essigsäure enthält, innerhalb 90 min zugegeben. Das Gemisch wird 3 h bei 250°C gehalten und die flüchtigen Anteile entfernt. Ausbeute 1010 T Harz (Fp 168°C, SZ 30, Viskosität 140 mPa · s). In einer roten Druckfarbe trocknet das Bindemittel hervorragend.

30. Es wird wie nach Beispiel 29 gearbeitet, jedoch mit einem höherviskosen Polymerisat, analoger Zusammensetzung, Fp 114°C, Bromzahl 121, Viskosität (67% in Toluol/20°C) 1347 mPa · s und zusätzlich 50 T Kolophonium. Ausbeute 1051 T Harz (Fp 165°C, SZ 40, Viskosität 105 mPa · s). Auch mit diesem Harz trocknen Druckfarben sehr rasch.

31. 250 T portugiesisches Kolophonium und 445 T Polymerisatharz analoger Zusammensetzung wie nach Beispiel 25, Fp 105°C, Viskosität (67% in Toluol/20°C) 4670 mPa · s, Bromzahl 115 werden geschmolzen. Man gibt 63 T Maleinsäureanhydrid zu und hält das Gemisch 2 h bei 200°C. Dann wird mit weiteren 274 T Kolophonium verdünnt. Bei 160°C werden 42 T des Phenolresols nach Beispiel 26, bei 180°C 31 T CaO und 6 T ZnO zugegeben. Das Gemisch wird auf 250°C erhitzt und ein Gemisch aus 16 T Essigsäure und 12 T Terpentinöl allmählich gegeben. Die Temperatur wird auf 260°C erhöht. Nach 3 h bei 260°C werden flüchtige Anteile entfernt. Ausbeute 1012 T Harz (Fp 171°C, SZ 39, Viskosität 391 mPa · s).

32. 525 T amerikanisches Tallharz und 445 T des Polymerisats nach Beispiel 26 werden geschmolzen und wie nach Beispiel 27 verfahren, jedoch wird das Phenolresol nach Abkühlen der Schmelze bei 160°C zugesetzt. Ausbeute 1041 T Harz (Fp 154°C, SZ 42, Viskosität 320 mPa · s). Das Harz trocknet sehr rasch in Tiefdruckfarben.

33. 525 T schwedisches Tallharz, SZ 175 und 445 T neutrales Polymerisat analoger Struktur wie das Polymerisat nach Beispiel 26, Fp 72°C, Bromzahl 155, Viskosität (67% in Toluol/20°C) 120 mPa · s werden geschmolzen und bei 160°C werden 55 T des Phenolresols nach Beispiel 26 zugegeben. Man erhitzt 1 h auf 200°C und setzt 63 T Maleinsäureanhydrid zu. Nach zweistündigem Erhitzen auf 200°C werden 35 T CaO zugegeben und bei 250°C ein Gemisch aus 16 T Essigsäure und 12 T Xylol innerhalb 1 h anteilweise zugesetzt. Nach vierstündigem Erhitzen auf 260°C werden die flüchtigen Anteile unter vermindertem Druck vom klaren Harz entfernt. Ausbeute 1045 T Harz (Fp 149, SZ 34, Viskosität 60 mPa · s). Tiefdruckfarben hieraus trocknen sehr rasch mit gutem Glanz und gutem Stand auf Papier.

34. Es wird verfahren wie nach Beispiel 29 mit dem Unterschied, daß zunächst das neutrale Polymerisat geschmolzen und die Maleinsäureanhydrid-Menge bei 160°C zugesetzt wird. Nach 2 h bei 200°C setzt man die gesamte Naturharzsäuremenge zu, setzt mit Phenolresol um und arbeitet weiter wie nach Beispiel 29. Ausbeute 1002 T Harz (Fp 172°C, SZ 31, Viskosität 185 mPa · s).

## Herstellung der Druckfarben

Die Bindemittel nach den Beispielen 1 bis 34 wurden zu Toluol-Tiefdruckfarben verarbeitet und diese drucktechnisch im Vergleich zu bekannten Produkten geprüft. Diese bekannten Resinate (Vergleichsharze A und B) werden durch Kondensation von 10 bis 12% Paraformaldehyd mit Naturharzsäure unter erhöhtem Druck und Erhitzen und Bildung von Teilestern und anschließender Versalzung mit CaO sowie anschließende Neutralisation mit Essigsäure hergestellt. Sie enthalten somit keine Kohlenwasserstoff-Polymerisate.

Vergleichsharz A:  Fp 122°C, SZ 26, Viskosität  80 mPa · s.  
Vergleichsharz B:  Fp 148°C, SZ 31, Viskosität 280 mPa · s.

50%ige Toluollösungen werden durch Toluolzusatz jeweils auf 17 Sekunden Auslaufzeit im 4-mm-DIN-Becher eingestellt und in schnellaufenden Kugelmühlen mit Pigmenten dispergiert. Der Pigmentanteil beträgt für Rotfarben 20%, für Blaufarben 16% und für Gelbfarben 13%, jeweils bezogen auf den Festkörpergehalt. Nach der Dispergierung werden die Farben erneut mit Toluol auf 17 s Auslaufzeit im 4-mm-DIN-Becher eingestellt.

## Drucktechnische Prüfung

Die Trocknung wird durch Aufziehen der Druckfarben mit einer Drahtspirale auf gestrichenem Papier mit einer Naßschichtdicke von 36 µm geprüft.

Die Glanzmessung nach Lange erfolgte im Vergleich zu Proben aus den Vergleichsharzen A und B (12 µm Naßschichtdicke auf gestrichenem Papier).

## Prüfung der Abriebfestigkeit

Auf satiniertes Papier wird eine 6 µm dicke Naßschicht der Farben aufgebracht und nach deren Trocknung 5 weitere 6 µm dicke Naßschichten, so daß man insgesamt eine Farbschicht aus 6mal 6-µm-Naßschichten erhält. Nach 24 Stunden Lagerung wird ein Stück des gefärbten Papiers eingespannt, mit einer Belastung von 600 g gegen ein Stück nichtgefärbtes Papier gedrückt und durch Druckbewegungen 30mal gescheuert (Scheuergerät Typ »Prüfbau«). Die Beurteilung der Abriebfestigkeit erfolgt von 0 bis 5, wobei 0 keinerlei Abrieb und 5 völligen Abrieb bedeutet.

Der Stand wird durch Aufzug von 6 µm Naßschicht auf satiniertes Papier beurteilt. Die Viskosität der Farben war nach 3 Wochen Lagerung nicht höher als die der Farben aus den Vergleichsharzen, deren Viskosität in dieser Zeit um etwa 30% angestiegen war.

Die Ergebnisse sind den Tabellen 2 bis 4 zu entnehmen.

## Diskussion der Ergebnisse

Die Proben gemäß der Erfindung zeigen im Vergleich zu den Proben aus den Vergleichsharzen bezüglich Trocknung, Glanz und Stand auf dem Papier mindestens gleich gute Werte. Hervorzuheben ist eine erhebliche Verbesserung der Abriebfestigkeit. Die erfindungsgemäßen Proben zeigen außerdem gegenüber den Proben, die ohne Neutralisation mit Essigsäure hergestellt sind, eine wesentlich raschere Trocknung.

Tabelle 1

| | Beispiele (Mengen in T) | | | | | | | | |
| --- | --- | --- | --- | --- | --- | --- | --- | --- | --- |
| | 18 | 19 | 20 | 21 | 22 | 23 | 24 | 24V | 25 |
| Copolymerisat nach Beispiel 1 | 470 | 470 | 470 | 470 | 470 | 470 | 470 | 470 | 470 |
| Kolophonium | 285 | 285 | 285 | 615 | 285 | 285 | 285 | 285 | 285 |
| Tallharz | 330 | 370 | 330 | — | 330 | 330 | 330 | 330 | 330 |
| Styrol | — | — | 175 | 100 | 175 | 250 | 250 | 250 | 300 |
| Maleinsäureanhydrid | — | 75 | — | 75 | 75 | 75 | 100 | 100 | 100 |
| CaO | 38,7 | 38,7 | 38,7 | 38,7 | 38,7 | 38,7 | 42 | 42 | 42 |
| Essigsäure | 16 | 16 | 16 | 16 | 16 | 16 | 16 | — | 16 |
| Xylol | 16 | 16 | 16 | 16 | 16 | 16 | 16 | — | 16 |
| Ausbeute | 1057 | 1132 | 1241 | 1212 | 1300 | 1370 | 1393 | 1400 | 1442 |
| Schmelzpunkt °C | 138 | 164 | 132 | 145 | 135 | 134 | 137 | 118 | 136 |
| Säurezahl | 41 | 76 | 43 | 66 | 63 | 58 | 62 | 105 | 60 |
| Viskosität 50% Toluol mPa · s | 58 | 106 | 55 | 95 | 60 | 68 | 101 | 24 | 101 |

Tabelle 2

**Rotfarben:**

**Am Beispiel**

| | 1 | 1V | 2 | 2V | 3 | 3V | 4 | 7 | 8 | 9 | 10 | 11 | 12 | 13 | 14 | 15 | 16 | 18 | 19 | 20 | 21 |
|---|---|---|---|---|---|---|---|---|---|---|---|---|---|---|---|---|---|---|---|---|---|
| Trocknung sec | 60 | 120 | 62 | 105 | 58 | 130 | 68 | 73 | 70 | 68 | 55 | 64 | 60 | 62 | 69 | 68 | 66 | 65 | 62 | 67 | 64 |
| Glanz <60° | 85 | 92 | 86 | 90 | 88 | 90 | 88 | 88 | 83 | 86 | 84 | 86 | 80 | 80 | 86 | 84 | 87 | 85 | 84 | 90 | 92 |
| Stand | + | − | + | − | + | − | + | + | + | + | + | + | + | + | + | + | + | + | + | + | + |
| Abriebfestigkeit | 1 | 1 | 1,5 | 1 | 1,5 | 1 | 1,5 | 2 | 1,5 | 1,5 | 1,5 | 1 | 1 | 1 | 1 | 1 | 1 | 1 | 1 | 1 | 1 |

**Vergleichsharze**

| | B | B | A | A | A | A | A | A | A | A | A | B | B | B | A | A | A | A | A | A | A |
|---|---|---|---|---|---|---|---|---|---|---|---|---|---|---|---|---|---|---|---|---|---|
| Trocknung sec | 62 | 62 | 70 | 70 | 70 | 70 | 70 | 70 | 70 | 70 | 70 | 62 | 62 | 62 | 70 | 70 | 70 | 70 | 70 | 70 | 70 |
| Glanz <60° | 78 | 78 | 82 | 82 | 82 | 82 | 82 | 82 | 82 | 82 | 82 | 78 | 78 | 78 | 82 | 82 | 82 | 82 | 82 | 82 | 82 |
| Stand | + | + | + | + | + | + | + | + | + | + | + | + | + | + | + | + | + | + | + | + | + |
| Abriebfestigkeit | 3,5 | 3,5 | 3,5 | 3,5 | 3,5 | 3,5 | 3,5 | 3,5 | 3,5 | 3,5 | 3,5 | 3,5 | 3,5 | 3,5 | 3,5 | 3,5 | 3,5 | 3,5 | 3,5 | 3,5 | 3,5 |

10

**0 065 268**

Tabelle 3

| | Blaufarben:<br>Am Beispiel | | | | | | Gelbfarben: | | | | |
| | 5 | 6 | 6a | 6b | 6c | 22 | 23 | 17 | 24 | 24V | 25 |
|---|---|---|---|---|---|---|---|---|---|---|---|
| Trocknung sec | 55 | 70 | 69 | 63 | 60 | 67 | 70 | 69 | 72 | 150 | 75 |
| Glanz <60° | 80 | 87 | 85 | 86 | 87 | 90 | 92 | 89 | 94 | 98 | 98 |
| Stand | + | + | + | + | + | + | + | + | + | — | + |
| Abriebfestigkeit | 1 | 1 | 1 | 1,5 | 1 | 1 | 1 | 2 | 1 | 1 | 1 |

| | Vergleichsharze | | | | | | | | | | |
| | B | A | A | B | B | A | A | A | A | A | A |
|---|---|---|---|---|---|---|---|---|---|---|---|
| Trocknung sec | 64 | 73 | 73 | 64 | 64 | 73 | 73 | 76 | 76 | 76 | 76 |
| Glanz <60° | 80 | 84 | 84 | 80 | 80 | 84 | 84 | 86 | 86 | 86 | 86 |
| Stand | + | + | + | + | + | + | + | + | + | + | + |
| Abriebfestigkeit | 3,5 | 3,5 | 3,5 | 3,5 | 3,5 | 3,5 | 3,5 | 3,5 | 3,5 | 3,5 | 3,5 |

Tabelle 4

| | Rotfarben:<br>Am Beispiel | | | | | | | | |
| | 26 | 27 | 28 | 29 | 30 | 31 | 32 | 33 | 34 |
|---|---|---|---|---|---|---|---|---|---|
| Trocknung/Sekunden | 63 | 58 | 59 | 62 | 64 | 58 | 59 | 68 | 56 |
| Glanz | 80 | 80 | 83 | 84 | 86 | 80 | 84 | 87 | 82 |
| Stand | + | + | + | + | + | + | + | + | + |
| Abriebfestigkeit | 1 | 1 | 1 | 1,5 | 1,5 | 1 | 1 | 1,5 | 1 |

Vergleichsharz A

| | 26 | 27 | 28 | 29 | 30 | 31 | 32 | 33 | 34 |
|---|---|---|---|---|---|---|---|---|---|
| Trocknung/Sekunden | — | — | — | 70 | 70 | — | — | 70 | — |
| Glanz | — | — | — | 82 | 82 | — | — | 82 | — |
| Stand | — | — | — | + | + | — | — | + | — |
| Abriebfestigkeit | — | — | — | 3,5 | 3,5 | — | — | 3,5 | — |

Vergleichsharz B

| | 26 | 27 | 28 | 29 | 30 | 31 | 32 | 33 | 34 |
|---|---|---|---|---|---|---|---|---|---|
| Trocknung/Sekunden | 62 | 62 | 62 | — | — | 62 | 62 | — | 62 |
| Glanz | 78 | 78 | 78 | — | — | 78 | 78 | — | 78 |
| Stand | + | + | + | — | — | + | + | — | + |
| Abriebfestigkeit | 3,5 | 3,5 | 3,5 | — | — | 3,5 | 3,5 | — | 3,5 |

| | Gelbfarben:<br>Am Beispiel | | |
| --- | --- | --- | --- |
| | 32 | 33 | 34 |
| Trocknung/Sekunden | 62 | 64 | 60 |
| Glanz | 82 | 85 | 88 |
| Stand | + | + | + |
| Abriebfestigkeit | 1 | 1 | 1 |
| Vergleichsharz A | | | |
| Trocknung/Sekunden | — | 75 | — |
| Glanz | — | 85 | — |
| Stand | — | + | — |
| Abriebfestigkeit | — | 3,5 | — |
| Vergleichsharz B | | | |
| Trocknung/Sekunden | 64 | — | 64 |
| Glanz | 80 | — | 80 |
| Stand | + | — | + |
| Abriebfestigkeit | 3,5 | — | 3,5 |

**Patentansprüche**

1. Verfahren zur Herstellung von Druckfarbenbindemitteln auf der Basis von Reaktionsprodukten aus a) Naturharzen, b) weiteren Kunstharzen, c) $\alpha,\beta$-olefinisch ungesättigten Carbonsäureeinheiten oder einem Mischpolymerisat aus (b+c), und d) Calciumverbindungen und gegebenenfalls weiteren Verbindungen von Metallen der II. Gruppe des Periodischen Systems, dadurch gekennzeichnet, daß A) das Naturharz a) mit $B_1$) einem Kohlenwasserstoff-Polymerisat $b_1$) auf der Grundlage von polymerisierten Kohlenwasserstoffen mit isolierten $C_5$-Ringen mit Bromzahlen von 80 bis 200 und der Carbonsäureeinheit $c_1$) oder $B_2$) dem Mischpolymerisat (b+c) mit einer Säurezahl von 35 bis 100 aus b) polymerisierbaren Kohlenwasserstoffen mit isolierten $C_5$-Ringen und c) einer $\alpha,\beta$-olefinisch ungesättigten Carbonsäurekomponente, wobei das Naturharz a) und das Mischpolymerisat (b+c) bzw. die Summe der Komponenten $b_1$) und $c_1$) im Gewichtsverhältnis von (1 bis 5) : 1, vorzugsweise (1 bis 1,5) : 1 bzw. 1 : 0,7 bis 1 zu einem Produkt mit der Säurezahl von 75 bis 150 und sodann C) mit Metallverbindungen d) mindestens einer Calciumverbindung in einer Menge von 1,5 bis 6 Gew.-% Metallanteil, bezogen auf die Gesamtmenge der Komponenten a) bis c), so umgesetzt wird, daß die Säurezahl um mindestens ein Drittel, vorzugsweise um mindestens 45% verringert wird und daß nach der Umsetzung der Metallverbindungen noch nicht umgesetzte Metallverbindungen durch Behandlung mit Essigsäure über Acetate in Salze des Harzes umgewandelt werden.

2. Verfahren nach Anspruch 1, dadurch gekennzeichnet, daß bis 30, vorzugsweise bis 25 Mol-% der Calciumverbindungen in Form von Calciumacetat umgesetzt werden.

3. Verfahren nach Anspruch 1 oder 2, dadurch gekennzeichnet, daß die Calciumverbindung im Gemisch mit mindestens einer Zink- und oder Magnesiumverbindung eingesetzt wird, wobei der Anteil an Calcium über 70% des Gesamtmetallgehalts ausmacht.

4. Verfahren nach einem oder mehreren der Ansprüche 1 bis 3, dadurch gekennzeichnet, daß die Metallverbindung d) in einer Menge von 1,8 bis 4,5 Gew.-% Metallanteil verwendet wird.

5. Verfahren nach einem oder mehreren der Ansprüche 1 bis 4, dadurch gekennzeichnet, daß das Reaktionsgemisch während oder nach der Umsetzung oder das Naturharz mit a1) Maleinsäureanhydrid und/oder a2) Phenolharz oder dessen Komponenten und/oder a3) olefinisch-ungesättigten aromatischen Kohlenwasserstoffen oder a4) Formaldehyd oder a5) Phenol oder das Naturharz vorher mit a6) Dicyclopentadien modifiziert wird.

6. Verfahren nach einem oder mehreren der Ansprüche 1 bis 5, dadurch gekennzeichnet, daß höchstens 70, vorzugsweise bis zu 65% der COOH-Gruppen des Reaktionsproduktes versalzt werden.

7. Verfahren nach einem oder mehreren der Ansprüche 1 bis 6, dadurch gekennzeichnet, daß als Polymerisat (b+c) ein solches mit einem mittleren Molekulargewicht von 300 bis 800, vorzugsweise 350 bis 700 und als Polymerisat b1) ein solches mit einem mittleren Molekulargewicht von 300 bis 5000, vorzugsweise 350 bis 3000 als Ausgangskomponente eingesetzt wird.

8. Verfahren nach einem oder mehreren der Ansprüche 1 bis 7, dadurch gekennzeichnet, daß die Komponente c) in Mengen von 7 bis 20, insbesondere 12,4—16 Gew.-%, bezogen auf die Mengen der polymerisierbaren Kohlenwasserstoffe bzw. des Polymerisats b1) eingesetzt wird.

9. Verwendung der nach dem Verfahren gemäß einem oder mehreren der Ansprüche 1 bis 8 hergestellten Druckfarbenbindemittel zur Herstellung von Druckfarben, insbesondere für Toluoltiefdruck.

## Claims

1. A process for preparing printing inks binders based on reaction products of a) natural resins, b) further synthetic resins, c) $\alpha,\beta$-olefinically unsaturated carboxylic acid units or a copolymer of (b+c) and d) calcium compounds and optionally other compounds of metalls of group II of the periodic system characterized in that A) the natural resin a) is reacted with B1) a hydrocarbon polymer b1) based on polymerized hydrocarbons having isolated $C_5$- nucleus with bromine numbers of 80 to 200 and the carboxylic acid unit c1) or B2) the copolymer (b+c) with an acid number of 35 to 100 derived from b) polymerizable hydrocarbons with isolated $C_5$- nucleus and c) an $\alpha,\beta$-olefinically unsaturated carboxylic acid component, wherein the natural resin a) and the copolymer (b+c) and the sum of the components b1) and c1) respectively being in a weight ratio of (1 to 5) : 1, preferably (1 to 1.5) : 1 and 1 : 1.7 to 1 respectively to yield a product having an acid number of 75 to 150, which is then C) reacted with metal compounds d) of at least one calcium compound in an amount of 1.5 to 6% by weight of metal content, based on the total amount of components a) to c) in such a way that he acid number is reduced by at least one third, preferably by at least 45% and that, after the reaction of the metal compounds, non-yet reacted metal compounds are converted via acetates into salts of the resins by treatment with acetic acid.

2. A process according to claim 1, characterized in that up to 30, preferably up to 25 mole-% of the calcium compounds are reacted in the form of calcium acetate.

3. A process according to claim 1 or 2, characterized in that the calcium compound is used in a mixture with at least one zinc compound and/or magnesium compound, the proportion of calcium being above 70% of the total metal content.

4. A process according to one or more of the claims 1 to 3, characterized in that the metal compound d) is used in an amount of 1.8 to 4.5% by weight of metal content.

5. A process as claimed according to one or more of the claims 1 to 4, characterized in that the reaction mixture, during or after the reaction or the natural resin is modified with a1) maleic anhydride and/or a2) phenolic resin or its components and/or a3) olefinically unsaturated aromatic hydrocarbons or a4) formaldehyde or a5) phenole, or the natural resin is previously modified with a6) dicyclopentadiene.

6. A process according to one or more of claims 1 to 5, characterized in that at most 70, preferably up to 65% of the COOH-groups of the reaction product are converted into salts.

7. A process according to one or more of the claims 1 to 6, characterized in that as polymer (b+c) a polymer with an average molecular weight of from 300 to 800, preferably 350 to 700 and as polymer b1) a polymer with an average molecular weight of from 300 to 5000, preferably 350 to 3000 is used as starting component.

8. A process according to one or more of the claims 1 to 7, characterized in that the component c) is used in amounts of 7 to 20, in particular 12.4 to 16% by weight, relative to the amounts of polymerizable hydrocarbons and of polymer b1) respectively.

9. Use of printing ink binders prepared according to one or more of claims 1 to 8 for preparation of printing inks, in particular for toluene intaglio printing.

## Revendications

1. Procédé de préparation de liants pour encre d'imprimerie à base de produit de réaction a) de résines naturelles, b) d'autres résines artificielles, c) d'unités acide carboxylique à insaturation $\alpha,\beta$-oléfinique ou d'un copolymère de (b+c) et d) de composés du calcium et éventuellement d'autres composés de métaux du deuxième groupe du tableau périodique, caractérisé en ce que l'on fait réagir A) la résine naturelle a) sur B1) un polymère hydrocarboné b1) à base d'hydrocarbures polymérisés possédant des cycles isolés en $C_5$, avec un indice d'iode de 80 à 200 et l'unité acide carboxylique $c_1$), ou $B_2$) sur le copolymère (b + c), présentant un indice d'acide de 35 à 100, constitué b) d'hydrocarbures polymérisables possédant des cycles isolés en $C_5$ et c) d'un composant acide carboxylique à insaturation $\alpha,\beta$-oléfinique, où la résine naturelle a) fait, respectivement avec le copolymère (b + c) et la somme des composants $b_1$) et $c_1$), un rapport pondéral respectivement de (1 à 5): 1, de préférence (1 à 1,5) 1, et 1 : 0,7 à 1, pour donner un produit ayant un indice d'acide de 75 à 150, puis C) sur des composés métalliques d), au moins d'un composé du calcium, en une quantité de 1,5 à 6% en poids de métal sur la base de la quantité totale des composants a) à c), de façon que l'indice d'acide soit diminué d'au moins un tiers, de préférence d'au moins 45%, et que, après la réaction des composés métalliques, les composés métalliques n'ayant pas encore réagi soient transformés, par traitement à l'acide acétique par l'intermédiaire d'acétates, en sels de la résine.

2. Procédé selon la revendication 1, caractérisé en ce que jusqu'à 30, de préférence jusqu'à 25%-molaire des composés du calcium sont transformés sous forme d'acétate de calcium.

3. Procédé selon l'une quelconque des revendications 1 ou 2, caractérisé en ce que le composé du calcium est utilisé en mélange avec au moins un composé du zinc et/ou du magnésium, le pourcentage de calcium étant supérieur à 70% de la teneur totale en métal.

4. Procédé selon l'une quelconque des revendications 1 à 3, caractérisé en ce que le composé métallique d) est utilisé en une quantité de 1,8 à 4,5% en poids de métal.

5. Procédé selon l'une quelconque des revendications 1 à 4, caractérisé en ce qu'on modifie le mélange réactionnel pendant ou après la réaction, ou la résine naturelle, a1) par de l'anhydride maléique et/ou a2) par une résine phénolique ou ses composants, et/ou a3) des hydrocarbures aromatiques à insaturation oléfinique ou a4) du formaldéhyde ou a5) du phénol, ou, avant la réaction, la résine naturelle par a6) du dicyclopentadiène.

6. Procédé selon l'une quelconque des revendications 1 à 5, caractérisé en ce qu'on salifie au plus 70, de préférence au plus 65% des groupes COOH du produit de réaction.

7. Procédé selon l'une quelconque des revendications 1 à 6, caractérisé en ce qu'on utilise en tant que composant de départ en tant que polymère (b + c) un polymère ayant une masse moléculaire moyenne de 300 à 800, de préférence de 350 à 700 et, en tant que polymère b1), un polymère ayant une masse moléculaire moyenne de 300 à 5000, de préférence de 350 à 3000.

8. Procédé selon l'une quelconque des revendications 1 à 7, caractérisé en ce qu'on utilise le composant c) en des quantités de 7 à 20, en particulier 12,4—16% en poids sur la base des quantités des hydrocarbures polymérisables ou du polymère b1).

9. Utilisation des liants pour encre d'imprimerie préparés selon l'une quelconque des revendications 1 à 8 pour la préparation d'encres d'imprimerie, en particulier pour l'impression hélio au toluène.